# EUROPÄISCHE PATENTANMELDUNG

(11) **EP 1 522 436 A2**
(43) Veröffentlichungstag der Anmeldung: **13.04.2005**
(21) Anmeldenummer: 04021634.3
(22) Anmeldetag: 10.09.2004
(51) Int. Cl.: B60H 1/00

(54) **Heizungskreislauf für ein Kraftfahrzeug**

(30) Priorität: 09.10.2003 DE 10347676
(71) Anmelder: Behr GmbH & Co. KG, 70469 Stuttgart (DE)
(72) Erfinder: Klingler, Dietrich Dipl.-Ing., 73540 Heubach (DE); Schwahn, Werner, 71701 Schwieberdingen (DE)

(57) **Zusammenfassung**

Die Erfindung betrifft einen Heizungskreislauf (1) für ein Kraftfahrzeug mit einer Wärmequelle (2) und einem Heizungs-Wärmetauscher, die über eine Kühlmittel-Zuführleitung (3) zur Leitung von heißem Kühlmittel von der Wärmequelle (2) zum Wärmetauscher und über eine Kühlmittel-Rückführleitung (4) zur Leitung des Kühlmittels vom Wärmetauscher zur Wärmequelle (2) miteinander verbunden sind, und die Zuführleitung (3) und die Rückführleitung (4) wenigstens bereichsweise durch jeweils eines von zwei konzentrisch verlaufenden Teilrohren (6, 7) eines gemeinsamen Rohrs (5) verlaufen, wobei das äußere Teilrohr (7) an seiner Innenmantelfläche Rippen (8) aufweist oder das innere Teilrohr an seiner Außenmantelfläche Rippen aufweist.

## Beschreibung

Die Erfindung betrifft einen Heizungskreislauf für ein Kraftfahrzeug, gemäß dem Oberbegriff des Anspruchs 1.

Eine derartige Klimaanlage ist aus der DE 100 12 676 A1 bekannt, die einen Heizkreislauf für ein Kraftfahrzeug betrifft mit einer Wärmequelle, beispielsweise einem Verbrennungsmotor des Kraftfahrzeugs, und einem Heizungs-Wärmetauscher vorgesehen, die über eine Kühlmittel-Zuführleitung zur Leitung von heißem Kühlmittel von der Wärmequelle zum Wärmetauscher und über eine Kühlmittel-Rückführleitung zur Leitung des Kühlmittels vom Wärmetauscher zur Wärmequelle miteinander verbunden sind. Um einen verbesserten Heizungskreislauf bereitzustellen, der einen kleineren Bauraum beansprucht und einfacher in das Fahrzeug zu montieren ist, wird hierin vorgeschlagen, dass die Zuführ- und die Rückführleitung wenigstens bereichsweise durch jeweils einen von zwei parallel verlaufenden Teilrohren eines gemeinsamen Rohres gebildet sind. Dabei wird auch eine koaxiale Anordnung vorgeschlagen, wobei das gemeinsame Rohr ein Innenrohr und ein Außenrohr umfasst, wobei bevorzugt das Innenrohr die Kühlmittel-Zuführleitung bildet und das Außenrohr die Kühlmittel-Rückführleitung. Über einen Stutzen ist in radialer Richtung ein Anschluss an das Außenrohr geführt.

Ein derartiger Heizungskreislauf lässt, insbesondere in Hinblick auf die Rohranordnung Wünsche offen.

Es ist Aufgabe der Erfindung, einen verbesserten Heizkreislauf zur Verfügung zu stellen.

Diese Aufgabe wird gelöst durch einen Heizkreislauf mit den Merkmalen des Anspruchs 1. Vorteilhafte Ausgestaltungen sind Gegenstand der Unteransprüche.

Erfindungsgemäß ist ein Heizungskreislauf für ein Kraftfahrzeug mit einer Wärmequelle und einem Heizungs-Wärmetauscher vorgesehen, die über eine Kühlmittel-Zuführleitung zur Leitung von heißem Kühlmittel von der Wärmequelle zum Wärmetauscher und über eine Kühlmittel-Rückführleitung zur Leitung des Kühlmittels vom Wärmetauscher zur Wärmequelle miteinander verbunden sind, und die Zuführleitung und die Rückführleitung wenigstens bereichsweise durch jeweils eines von zwei konzentrisch verlaufenden Teilrohren eines gemeinsamen Rohrs verlaufen, wobei das äußere Teilrohr an seiner Innenmantelfläche Rippen aufweist oder das innere Teilrohr an seiner Außenmantelfläche Rippen aufweist. Die Rippen erstrecken sich bevorzugt in radialer Richtung und verlaufen in Längsrichtung des Teilrohres. Dies ermöglicht eine gute Führung für das innere bzw. äußere Teilrohr und lässt eine ausreichend große Öffnung für ein Durchströmen des Kühlmittels frei. Femer wird das innere Teilrohr im äußeren Teilrohr konzentrisch gehalten, so dass die Strömung im Inneren nicht gestört wird.

Bevorzugt ist das Teilrohr, an dem die Rippen angeordnet sind, ein Strangpressprofil, insbesondere aus Aluminium.

Vorzugsweise ist mindestens ein Ende des Rohres gestaucht, wobei insbesondere eine umlaufende Rippe ausgebildet ist, die mit als Sitz für einen O-Ring dient.

Der Endbereich des Rohres ist vorzugsweise rippenfrei ausgebildet, so dass eine einfache Anbindung möglich ist.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht eines Heizkörpers mit einem erfindungsgemäßen Rohr,
- Fig. 2: einen Schnitt durch die Rohranbindung von Fig. 1,
- Fig. 3: einen Schnitt durch die Rohranbindung entlang Linie III-III in Fig. 2, und
- Fig. 4: eine Detailansicht eines Endes des Rohrs von Fig. 1.

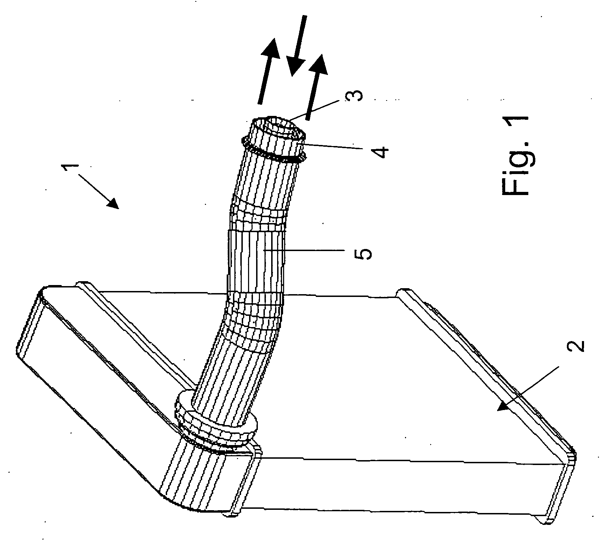

Fig. 1 zeigt einen Teil eines Heizungskreislaufs 1, der einen Heizkörper 2, der eine Wärmequelle bildet, und ein eine Kühlmittel-Zuführleitung 3 und eine Kühlmittel-Rückführleitung 4 umfassendes Rohr 5 aufweist, wobei die Strömungsrichtung in Fig. 1 durch Pfeile angedeutet ist. Ferner ist Teil des Heizkreislaufs 1 eine Kühlmittelpumpe sowie ein Wärmetauscher, die nicht dargestellt sind.

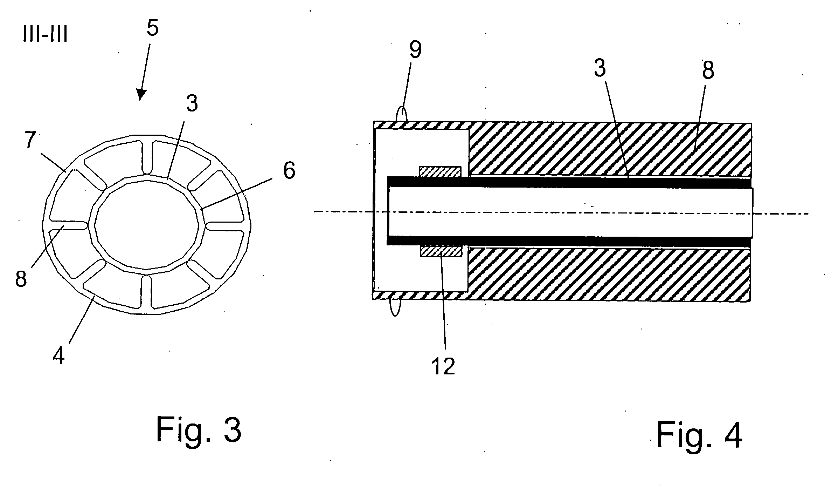

Gemäß dem vorliegenden Ausführungsbeispiel bildet die Zuführleitung 3 das innere Teilrohr 6 und die Rückführleitung 4 das äußere Teilrohr 7. Dabei weist das äußere Teilrohr 7 sich in radialer Richtung in Längsrichtung erstreckende Rippen 8 auf (siehe Fig. 3). Bei diesem Teilrohr 7 handelt es sich um ein Aluminium-Strangpressprofil. Das innere Teilrohr 6 wird durch einen Schlauch gebildet, der vor dem Biegen des Rohres 5 eingezogen wird, so dass das äußere Teilrohr 7 als Führungsrohr dient.

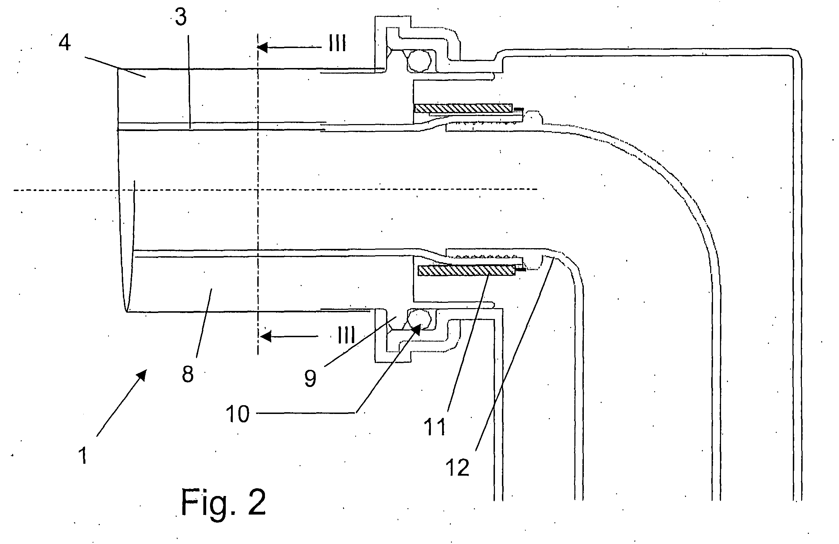

Die Enden des äußeren Teilrohrs 7 sind unter Entfemung der Rippen 8 in einem Endbereich derart vorbearbeitet, dass das äußere Teilrohr 7 angestaucht werden kann (siehe Fig. 4). Hierbei ist eine umlaufende Rippe 9 angestaucht, welche einen Sitz für einen O-Ring 10 (siehe Fig. 2) bildet, welcher der Abdichtung nach außen dient.

Zum Anschließen ist auf dem inneren Teilrohr 6 ein Spannring 11 vorgesehen, welcher sich bei der Montage des äußeren Teilrohrs 7 automatisch aufschiebt, wobei ein Rohr 12 als Anschluss vorgesehen ist, das sich von innen in das innere Teilrohr 6 einschiebt, wobei das innere Teilrohr 6 aufgeweitet wird (siehe Fig. 2).

### Bezugszeichenliste

- 1: Heizungskreislauf
- 2: Heizkörper, Wärmequelle
- 3: Kühlmittel-Zuführleitung
- 4: Kühlmittel-Rückführleitung
- 5: Rohr
- 6: inneres Teilrohr
- 7: äußeres Teilrohr
- 8: Rippe
- 9: umlaufende Rippe
- 10: O-Ring
- 11: Spannring
- 12: Rohr

## Patentansprüche

1. Heizungskreislauf für ein Kraftfahrzeug mit einer Wärmequelle (2) und einem Heizungs-Wärmetauscher, die über eine Kühlmittel-Zuführleitung (3) zur Leitung von heißem Kühlmittel von der Wärmequelle (2) zum Wärmetauscher und über eine Kühlmittel-Rückführleitung (4) zur Leitung des Kühlmittels vom Wärmetauscher zur Wärmequelle (2) miteinander verbunden sind, und die Zuführleitung (3) und die Rückführleitung (4) wenigstens bereichsweise durch jeweils eines von zwei konzentrisch verlaufenden Teilrohren (6, 7) eines gemeinsamen Rohrs (5) verlaufen, **dadurch gekennzeichnet, dass** das äußere Teilrohr (7) an seiner Innenmantelfläche Rippen (8) aufweist oder das innere Teilrohr an seiner Außenmantelfläche Rippen aufweist.

2. Heizungskreislauf nach Anspruch 1, **dadurch gekennzeichnet, dass** die Rippen (8) sich in radialer Richtung erstrecken und in Längsrichtung des Teilrohres (7) verlaufen.

3. Heizungskreislauf nach Anspruch 1 oder 2, **dadurch gekennzeichnet, dass** das Teilrohr (7), an dem die Rippen (8) angeordnet sind, ein Strangpressprofil ist.

4. Heizungskreislauf nach einem der vorhergehenden Ansprüche, **dadurch gekennzeichnet, dass** das Teilrohr (7), an dem die Rippen (8) angeordnet sind, als Führungsrohr dient.

5. Heizungskreislauf nach einem der vorhergehenden Ansprüche, **dadurch gekennzeichnet, dass** mindestens ein Ende des Rohres (4) gestaucht ist.

6. Heizungskreislauf nach einem der vorhergehenden Ansprüche, **dadurch gekennzeichnet, dass** an mindestens einem Ende des Rohres (4) ein Spannring (9) vorgesehen ist, der das äußere Teilrohr (7) und das innere Teilrohr (6) verspannt.

7. Heizungskreislauf nach einem der vorhergehenden Ansprüche, **dadurch gekennzeichnet, dass** an mindestens einem Ende des Rohres (4) eine umlaufende Rippe (9) vorgesehen ist.

8. Heizungskreislauf nach einem der vorhergehenden Ansprüche, **dadurch gekennzeichnet, dass** mindestens ein Ende des Rohres (4) rippenfrei ausgebildet ist.
